(19) Europäisches Patentamt
European Patent Office
Office européen des brevets

(11) EP 4 769 624 A1

(12) # EUROPEAN PATENT APPLICATION
published in accordance with Art. 153(4) EPC

(43) Date of publication:
**01.07.2026 Bulletin 2026/27**

(21) Application number: **25790741.0**

(22) Date of filing: **16.04.2025**

(51) International Patent Classification (IPC):
***H01M 10/0567*** (2010.01) ***H01M 10/052*** (2010.01)
***H01M 4/131*** (2010.01) ***H01M 4/525*** (2010.01)
***H01M 4/505*** (2010.01) ***H01M 4/133*** (2010.01)
***H01M 4/134*** (2010.01) ***H01M 4/36*** (2006.01)
***H01M 4/587*** (2010.01) ***H01M 4/48*** (2010.01)

(52) Cooperative Patent Classification (CPC):
**H01M 4/02; H01M 4/131; H01M 4/133; H01M 4/134; H01M 4/36; H01M 4/38; H01M 4/48; H01M 4/505; H01M 4/525; H01M 4/587; H01M 10/052; H01M 10/0525; H01M 10/0567; H01M 10/0568; H01M 10/0569;** (Cont.)

(86) International application number:
**PCT/KR2025/095228**

(87) International publication number:
**WO 2025/221116 (23.10.2025 Gazette 2025/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.04.2024 KR 20240051725**

(71) Applicant: **LG Energy Solution, Ltd.**
**Seoul 07335 (KR)**

(72) Inventors:
- **JI, Su Hyeon**
  **Daejeon 34122 (KR)**
- **LEE, Chul Haeng**
  **Daejeon 34122 (KR)**
- **LEE, Jung Min**
  **Daejeon 34122 (KR)**
- **YEOM, Chul Eun**
  **Daejeon 34122 (KR)**
- **KO, Jin Hyuck**
  **Daejeon 34122 (KR)**

(74) Representative: **Hoffmann Eitle**
**Patent- und Rechtsanwälte PartmbB**
**Arabellastraße 30**
**81925 München (DE)**

(54) **NON-AQUEOUS ELECTROLYTE AND LITHIUM SECONDARY BATTERY COMPRISING SAME**

(57) A non-aqueous electrolyte includes a lithium salt, an organic solvent, and an additive. The additive includes a compound having a cyclic borate-based substituent and an oxazolidone-based matrix substituted with a fused ring, so that a lithium secondary battery applying the same has improved high-temperature cycle characteristics and high-temperature storage characteristics, thereby improving overall performance.

*FIG. 1*

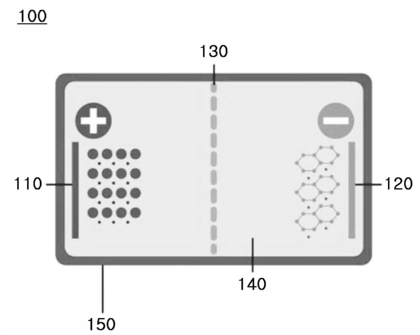




Processed by Luminess, 75001 PARIS (FR)

(Cont. next page)

(52) Cooperative Patent Classification (CPC): (Cont.)
Y02E 60/10

## Description

TECHNICAL FIELD

The present disclosure relates to a non-aqueous electrolyte and a lithium secondary battery including the same.

BACKGROUND ART

Recently, as the application areas of the lithium secondary batteries have expanded across a wide range of technologies, including not only power supply for electronic devices such as electric, electronic, communication, and computers, but also power storage for large-area devices such as vehicles and power storage devices, the demand for high-capacity, high-output, and high-stability secondary batteries is increasing.

For example, as the lithium secondary batteries develop to high capacity and high power, the probability of abnormal temperature rise during charging and discharging process is increasing, which may lead to a so-called thermal runaway phenomenon in which a flame explodes at a high temperature, and in the event of thermal runaway, the fire may not be easily extinguished. Thus, safety issues are recognized as one of the more important issues to be resolved in high-capacity, high-output lithium secondary batteries.

DISCLOSURE OF THE INVENTION

TECHNICAL PROBLEM

The present disclosure provides a non-aqueous electrolyte capable of suppressing the degeneration of the positive electrode, reducing side reactions between a positive electrode and an electrolyte, forming a uniform and dense solid electrolyte interphase (SEI) film on a negative electrode, and improving the durability of a lithium secondary battery at high temperatures.

The present disclosure further provides a lithium secondary battery having improved high-temperature cycle characteristics and high-temperature storage characteristics by including the non-aqueous electrolyte, thereby improving overall performance of the lithium secondary battery.

TECHNICAL SOLUTION

The non-aqueous electrolyte of the present disclosure includes a lithium salt; an organic solvent; and an additive, in which the additive includes at least one selected from the compounds represented by Formulas 1 to 4:

[Formula 1]

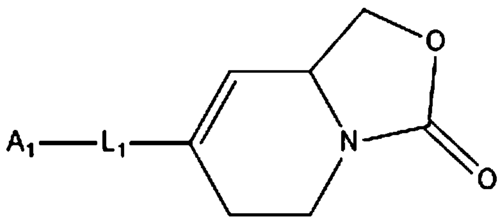

[Formula 2]

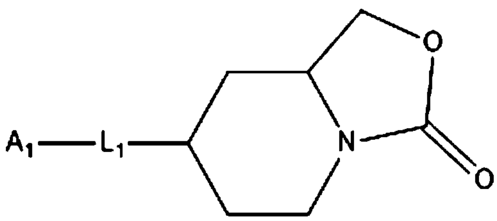

[Formula 3]

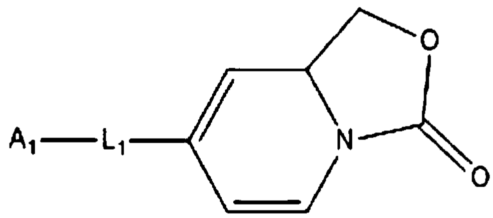

[Formula 4]

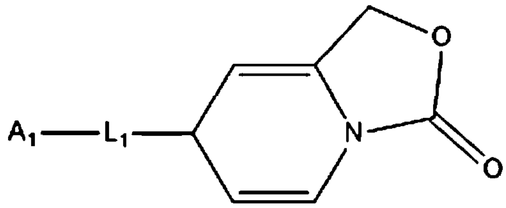

In Formulas 1 to 4, $L_1$ is selected from a direct bond and an alkylene group having 1 to 10 carbon atoms which may be substituted with fluorine, and $A_1$ is selected from groups represented by Formulas A-1 and A-2:

[Formula A-1]

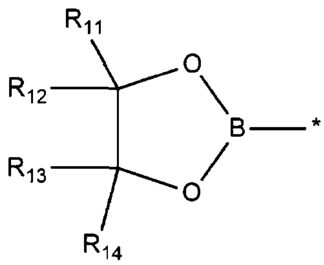

[Formula A-2]

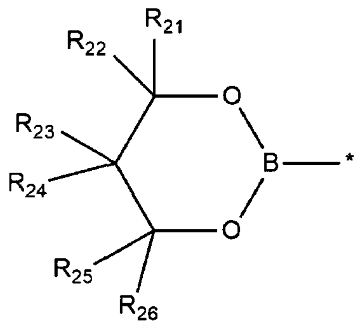

In Formula A-1 or formula A-2, $R_{11}$, $R_{12}$, $R_{13}$, $R_{14}$, $R_{21}$, $R_{22}$, $R_{23}$, $R_{24}$, $R_{25}$, and $R_{26}$ are each independently selected from H, F, an alkyl group having 1 to 5 carbon atoms, and an alkyl group having 1 to 5 carbon atoms substituted with one or more fluorine atoms, and * is a bonding site.

In addition, the lithium secondary battery of the present disclosure includes a positive electrode, a negative electrode, and the non-aqueous electrolyte.

ADVANTAGEOUS EFFECTS

The compounds represented by Formulas 1 to 4 provided as additives for the non-aqueous electrolyte of the present disclosure may form a uniform and dense solid electrolyte interphase (SEI) film in a polymeric form on a positive electrode. For example, the compounds of Formulas 1 to 4 have an oxazolidone-based matrix substituted with a cyclic

borate-based substituent and a fused ring. The cyclic borate-based substituent forms a stable positive/negative electrode film through a ring-opening reaction, and the formed film has excellent lithium transport characteristics because oxygen atoms exist around boron as the center. In addition, the cyclic borate-based substituent reacts with an acid in the electrolyte to suppress metal elution from the positive electrode, and prevent damage to the film derived therefrom.

The oxazolidone-based skeleton with a substituted fused ring has a low lithium transport energy barrier because a nitrogen atom and an oxygen atom, which are rich in unshared electron pairs, are connected, thereby forming a film with excellent lithium transport characteristics. In addition, the electron-rich nitrogen and oxygen moieties have strong bonding power with metals, so that a film with a large area may be stably formed on the surface of the positive electrode.

When a non-aqueous electrolyte including the compounds of Formulas 1 to 4 provided as additives for the non-aqueous electrolyte of the present disclosure is applied to a lithium secondary battery, the passivation ability of SEI is suppressed from deteriorating at high temperatures, thereby preventing deterioration of the negative electrode, and thus, improving the life characteristics of the battery.

Therefore, the use of the non-aqueous electrolyte of the present disclosure including one or more of the compounds of Formulas 1 to 4 may form a stable electrode-electrolyte interface even at high temperatures, so that the high temperature cycle characteristics and high temperature storage characteristics may be improved, thereby implementing a lithium secondary battery with improved overall performance.

BRIEF DESCRIPTION OF THE DRAWINGS

The following drawings attached hereto exemplify embodiments of the present disclosure and serve to further understand the technical idea of the present disclosure together with the detailed description of the disclosure to be described later. Therefore, the present disclosure should not be construed as being limited to the matters illustrated in the drawings.

FIG. 1 illustrates the structure of a lithium secondary battery according to one embodiment of the present disclosure.
FIG. 2 is a diagram for illustrating a vehicle including a battery pack constituted with the lithium secondary battery of FIG. 1.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

BEST MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

As used herein, it should be understood that the terms "comprise," "include," or "have," are intended to specify the presence of a feature, number, step, component, or combination thereof, but do not exclude in advance the possibility of the presence or addition of one or more other features, numbers, steps, components, or combinations thereof.

Before explaining the present disclosure, in the description of "carbon number a to b" in the specification, "a" and "b" mean the number of carbon atoms included in a specific functional group. That is, the functional group may include "a" to "b" carbon atoms. For example, the "alkylene group of carbon numbers 1 to 5" may include an alkylene group having 1 to 5 carbon atoms, such as $-CH_2-$, $-CH_2CH_2-$, $-CH_2CH_2CH_2-$, $-CH_2(CH_3)CH-$, $-CH(CH_3)CH_2-$, $-CH(CH_3)CH_2CH_2-$, and $-CH(CH_2CH_3)CH_2CH_2-$.

In addition, all alkyl groups herein may be substituted or unsubstituted. The term "substituted" means, unless otherwise defined, that at least one hydrogen bonded to carbon is substituted with an element other than hydrogen, for example, substituted with a halogen atom, a nitro group, or a nitrile group.

When a secondary battery is operated at a high voltage to achieve high capacity of the secondary battery, as charging and discharging proceeds, side reactions caused by the degradation of the electrolyte in the secondary battery may cause the film formed on the surfaces of the positive and negative electrodes or the electrode surface structure to deteriorate, for example, transition metal ions may be eluted from the surface of the positive electrode of the secondary battery. As such, the transition metal ions are electro-deposited on the negative electrode of the secondary battery, which reduces the passivation ability of the SEI, resulting in degradation of the negative electrode.

The deterioration phenomenon of secondary batteries tends to accelerate when the potential of the positive electrode increases or when the battery is exposed to high temperatures.

In addition, when a lithium secondary battery is used continuously over an extended time or exposed to high temperatures, gas is generated, which causes a swelling phenomenon in which the thickness of the battery increases. The amount of gas generated at this time is known to be affected by, for example, the state of SEI formed on the negative electrode.

In consideration of these points, the present disclosure provides a non-aqueous electrolyte capable of suppressing the elution of metal ions from the positive electrode, forming a stable SEI film on the negative electrode, reducing the swelling phenomenon of the secondary battery, and increasing stability at high temperatures.

Hereinafter, the present disclosure will be described in more detail.

Referring to FIG. 1, a lithium secondary battery 100 according to one embodiment of the present disclosure includes an electrode assembly including a positive electrode 110, a negative electrode 120 facing the positive electrode 110, a separator 130 interposed between the positive electrode 110 and the negative electrode 120, a non-aqueous electrolyte 140, and a battery case 150 accommodating the electrode assembly and the non-aqueous electrolyte 140.

The lithium secondary battery 100 may be manufactured by housing the electrode assembly in the battery case 150, and then injecting the non-aqueous electrolyte 140 as described above.

The lithium secondary battery 100 according to one embodiment of the present disclosure may be manufactured in, for example, a prismatic type, a pouch type, a coin type or a cylindrical type, depending on the form to be manufactured.

Non-aqueous Electrolyte

The non-aqueous electrolyte 140 according to one embodiment of the present disclosure includes a lithium salt, an organic solvent, and an additive, in which the additive includes at least one selected from compounds represented by Formulas 1 to 4 below. The lithium secondary battery 100 using the non-aqueous electrolyte 140 including the additive of the present disclosure may have excellent high-temperature cycle characteristics and high-temperature storage characteristics due to suppression of degradation caused by interfacial reactions at high temperatures.

[Formula 1]

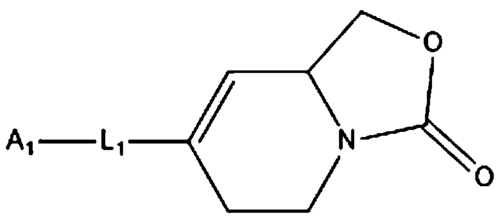

[Formula 2]

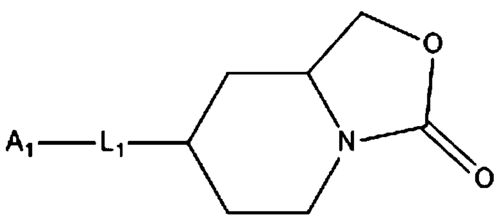

[Formula 3]

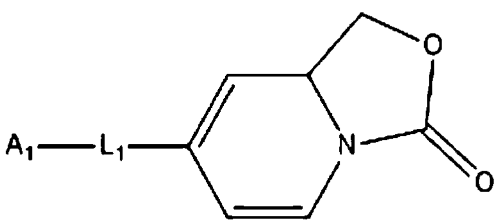

[Formula 4]

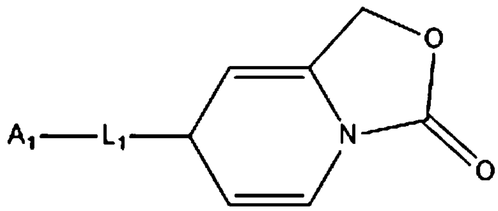

The compounds of Formulas 1 to 4 may be decomposed and polymerized into a polymer form to form a uniform and dense polymeric film on the surface of the negative electrode, and the film thus formed may prevent or suppress precipitation and electrodeposition due to transition metal elution from the positive electrode, thereby improving high-temperature durability and life characteristics. In addition, when the lithium secondary battery is exposed to a high voltage potential, the compound of Formula 1 may form a film on the positive electrode with the remaining amount after the formation of the film on the the negative electrode, thereby preventing or suppressing deterioration due to electrolyte oxidation and decomposition on the surface of the positive electrode.

In Formulas 1 to 4, $L_1$ may be selected from a direct bond and an alkylene group having 1 to 10 carbon atoms which may be substituted with fluorine. In addition, $L_1$ may be selected from a direct bond and an alkylene group having 1 to 5 carbon atoms which may be substituted with fluorine. When $L_1$ is a direct bond, the distance between the cyclic borate and the oxazolidone parent substituted with a fused ring is shortened, so that the solvation of lithium ions is easier, thereby facilitating the movement of lithium ions on the positive/negative electrode surfaces. In addition, when the oxidation-reduction reaction proceeds on the electrode surface after the additive is desolvated, the additive may easily participate in the film reaction, thereby enabling a stable film formation.

In Formulas 1 to 4, $A_1$ is selected from groups represented by Formulas A-1 and A-2 below. In the case of Formula A-1, $A_1$ has an advantage in that the structural interference of the substituents $R_{11}$ to $R_{14}$ on the B-O side where the ring opening reaction occurs is less, so that the film formation reaction occurs more easily.

[Formula A-1]

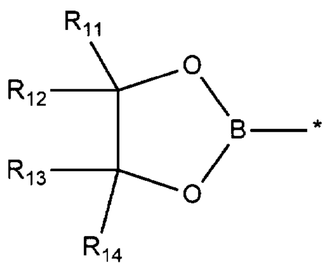

[Formula A-2]

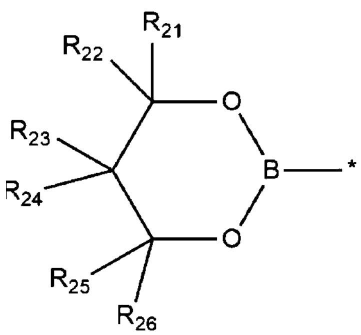

In Formula A-1 or A-2, $R_{11}$, $R_{12}$, $R_{13}$, $R_{14}$, $R_{21}$, $R_{22}$, $R_{23}$, $R_{24}$, $R_{25}$, and $R_{26}$ may each be independently selected from H, F, an alkyl group having 1 to 5 carbon atoms, and an alkyl group having 1 to 5 carbon atoms substituted with one or more fluorine atoms. In Formula A-1 or A-2, * represents a bonding site. For example, in Formula A-1 or A-2, $R_{11}$, $R_{12}$, $R_{13}$, $R_{14}$, $R_{21}$, $R_{22}$, $R_{23}$, $R_{24}$, $R_{25}$, and $R_{26}$ may each be independently selected from H, F, an alkyl group having 1 to 3 carbon

atoms, and an alkyl group having 1 to 3 carbon atoms substituted with one or more fluorine atoms, and according to one embodiment, may each be independently selected from H, F and a methyl group. In this case, the viscosity of the solvent does not increase, the ring opening reaction is not affected, and the structural stability of the compound may be better.

For example, the compound of Formula 1 of the present disclosure may be any one selected from Formulas 1a to 1f:

[Formula 1a]

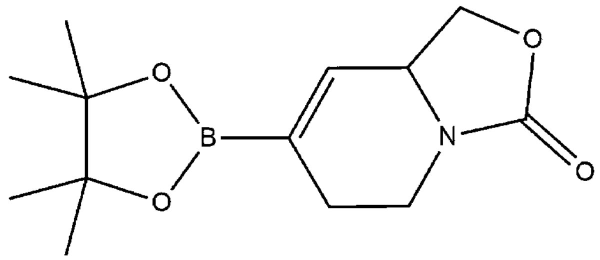

[Formula 1b]

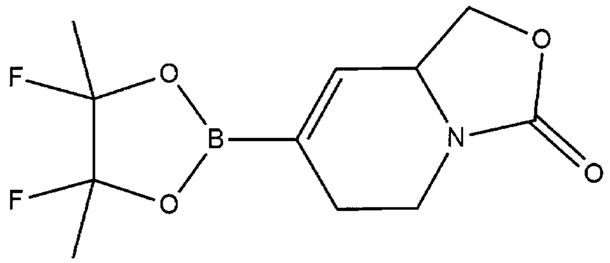

[Formula 1c]

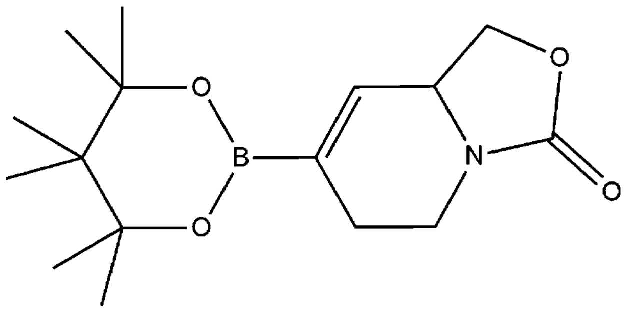

[Formula 1d]

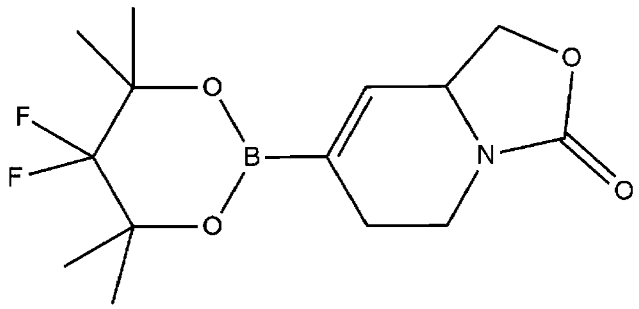

[Formula 1e]

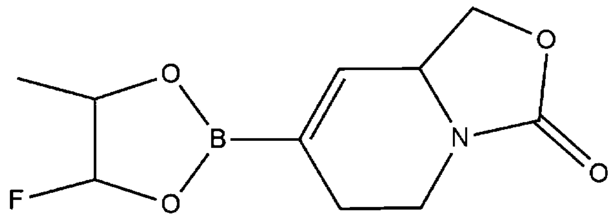

[Formula 1f]

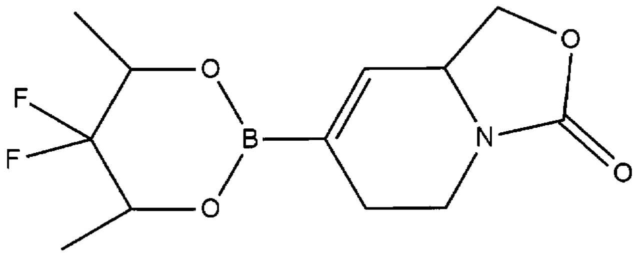

For example, the compound of Formula 2 of the present disclosure may be any one selected from Formulas 2a to 2f:

[Formula 2a]

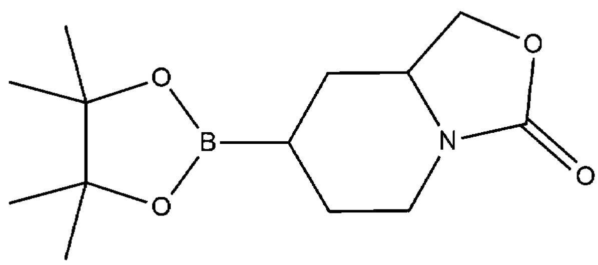

[Formula 2b]

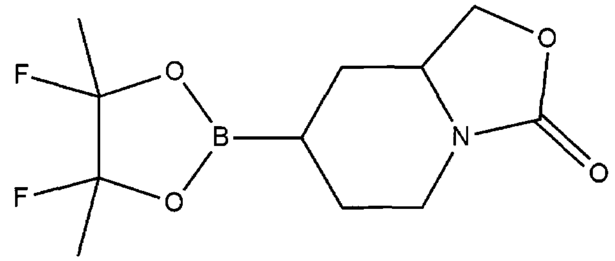

[Formula 2c]

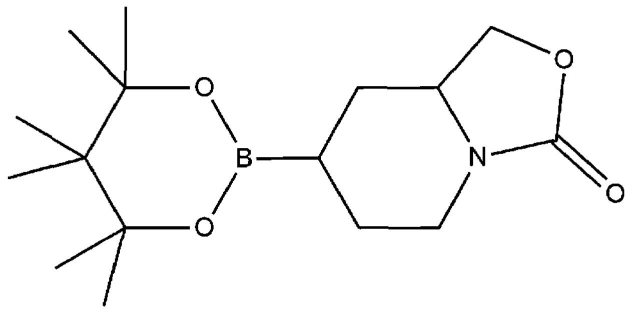

[Formula 2d]

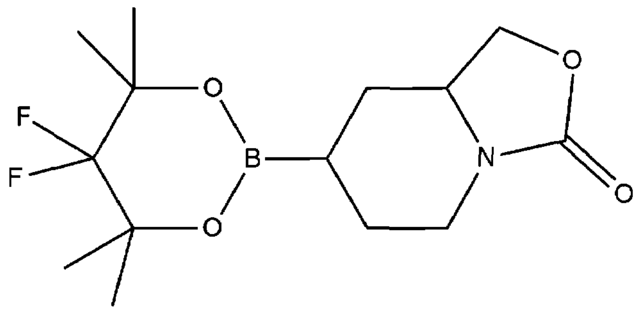

[Formula 2e]

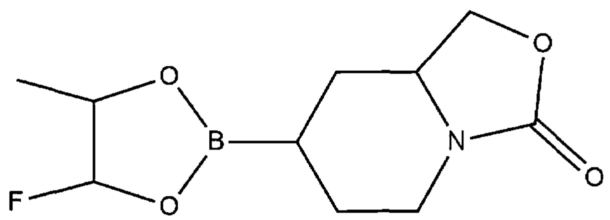

[Formula 2f]

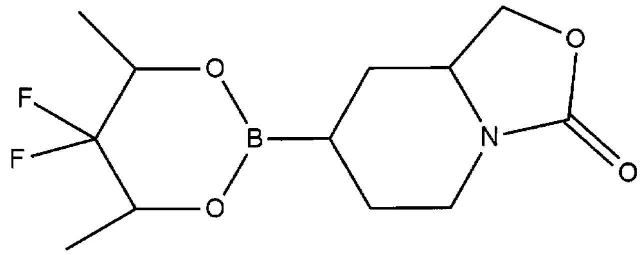

.

For example, the compound of Formula 3 of the present disclosure may be any one selected from Formulas 3a to 3f:

[Formula 3a]

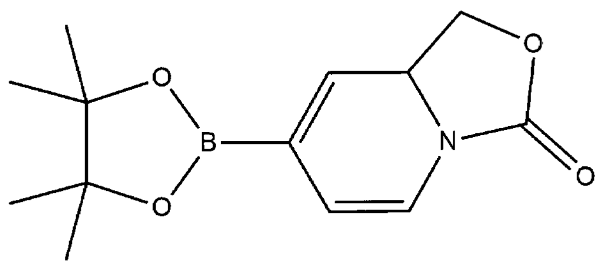

[Formula 3b]

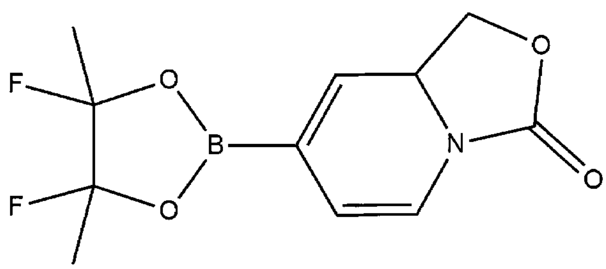

[Formula 3c]

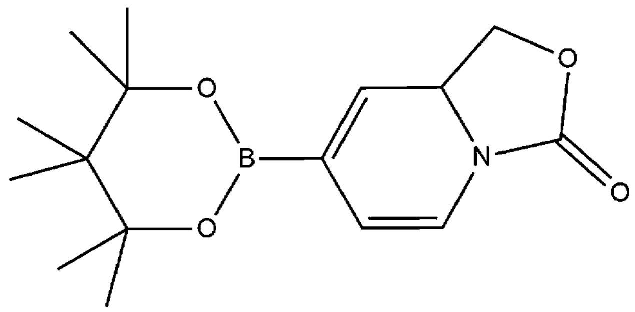

[Formula 3d]

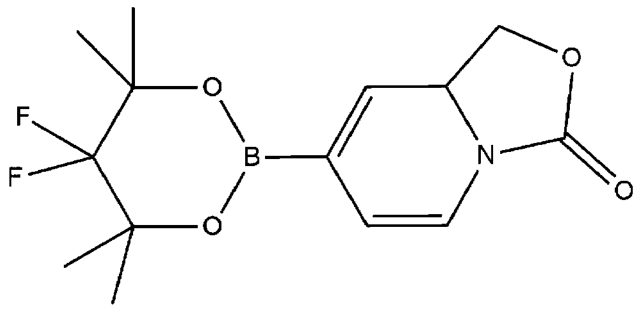

[Formula 3e]

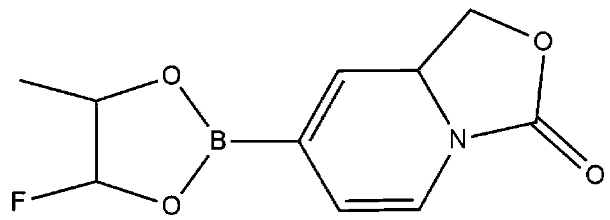

[Formula 3f]

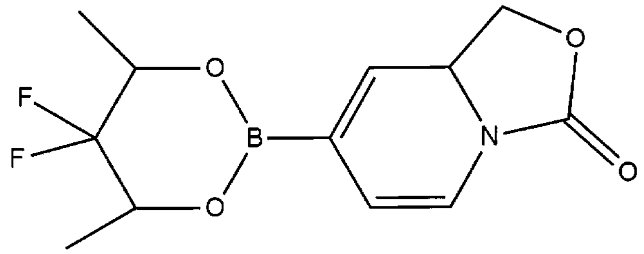

For example, the compound of Formula 4 of the present disclosure may be any one selected from Formulas 4a to

4f:

[Formula 4a]

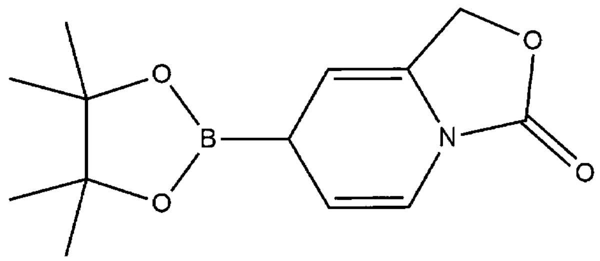

[Formula 4b]

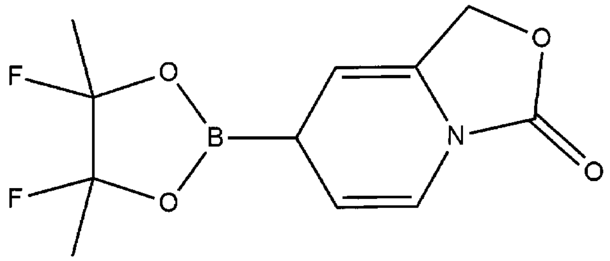

[Formula 4c]

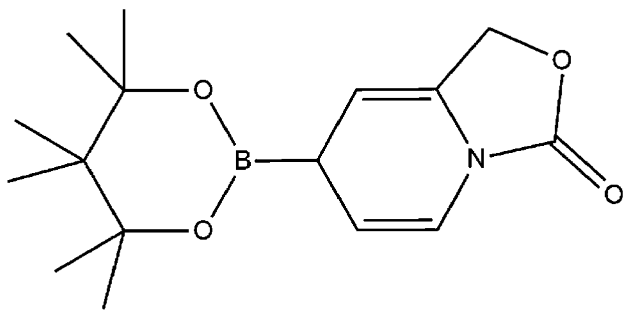

[Formula 4d]

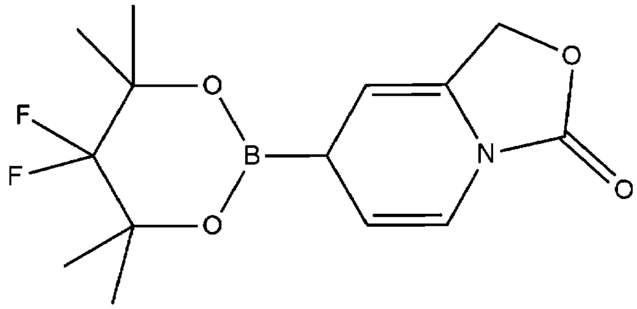

[Formula 4e]

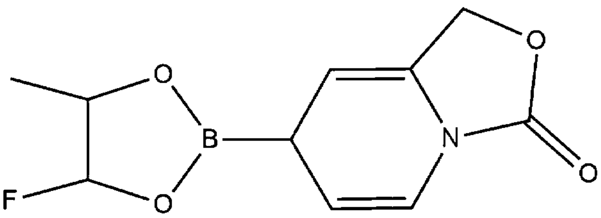

[Formula 4f]

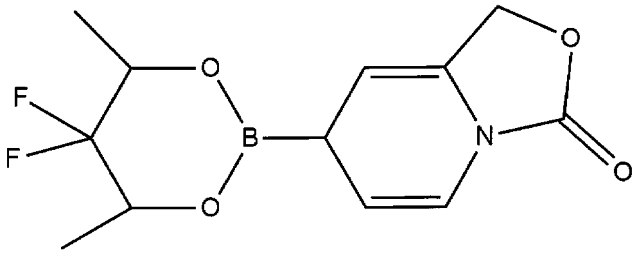

The additive for a non-aqueous electrolyte according to the present disclosure may be included in an amount of 0.01 parts by weight to 10.0 parts by weight, for example, about 0.1 parts by weight to 8.0 parts by weight, or about 3.0 parts by weight to 6.0 parts by weight, based on 100 parts by weight of the non-aqueous electrolyte. When the range is satisfied, a sufficient amount of SEI may be formed, and the viscosity of the electrolyte is maintained at an appropriate level, so that the cycle characteristics or capacity characteristics of the lithium secondary battery 100 are excellent when stored at high temperatures.

The lithium salt included in the non-aqueous electrolyte 140 of the present disclosure is used as an electrolyte salt in a lithium secondary battery 100 and is used as a medium for transferring ions. Typically, the lithium salt includes $Li^+$ as a cation, and as an anion, one selected from $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$.

For example, the lithium salt may include a single substance or a mixture of two or more substances selected from LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (lithium bis(fluorosulfonyl)imide; LiFSI), $LiN(SO_2CF_2CF_3)_2$ (lithium bis(perfluoroethanesulfonyl)imide; LiBETI), and $LiN(SO_2CF_3)_2$ (lithium bis(trifluoromethanesulfonyl)imide; LiTFSI). In addition to these, lithium salts commonly used in the electrolyte 140 of the lithium secondary battery 100 may be used without limitation.

The lithium salt may be appropriately changed within a normally usable range, but, according to one embodiment, may be included in the electrolyte at a concentration of about 0.5 M to 3 M, about 0.5 M to 2.5 M, or about 0.8 M to 2 M, in order to obtain the effect of forming a film for suppressing corrosion on the electrode surface. When the concentration of the lithium salt satisfies the above range, the effect of improving the cycle characteristics of the lithium secondary battery 100 during high-temperature storage is sufficient, and the viscosity of the non-aqueous electrolyte 140 is appropriate, so that the electrolyte impregnability may be improved.

The organic solvent included in the non-aqueous electrolyte 140 of the present disclosure may include at least one organic solvent selected from a cyclic carbonate-based organic solvent, a linear carbonate-based organic solvent, a linear ester-based organic solvent, and a cyclic ester-based organic solvent.

According to one embodiment, the organic solvent may include a cyclic carbonate-based organic solvent, a linear carbonate-based organic solvent, or a mixture thereof.

The cyclic carbonate-based organic solvent is an organic solvent having a high viscosity and a high dielectric constant and capable of well dissociating a lithium salt in the electrolyte. Examples thereof may include at least one organic solvent selected from ethylene carbonate (EC), propylene carbonate (PC), 1,2-butylene carbonate, 2,3-butylene carbonate, 1,2-pentylene carbonate, 2,3-pentylene carbonate, and vinylene carbonate, and among these, may include ethylene carbonate.

The linear carbonate-based organic solvent is an organic solvent having a low viscosity and a low dielectric constant, and may include at least one selected from, for example, dimethyl carbonate (DMC), diethyl carbonate (DEC), dipropyl carbonate, ethyl methyl carbonate (EMC), methyl propyl carbonate, and ethyl propyl carbonate, or for example, may include ethyl methyl carbonate (EMC).

In addition, the organic solvent may further include, in addition to at least one carbonate-based organic solvent selected from the cyclic carbonate-based organic solvent and the linear carbonate-based organic solvent, at least one ester-based organic solvent selected from a linear ester-based organic solvent and a cyclic ester-based organic solvent, in order to prepare an electrolyte having high ionic conductivity.

The linear ester-based organic solvent may include at least one organic solvent selected from methyl acetate, ethyl acetate, propyl acetate, methyl propionate, ethyl propionate, propyl propionate, and butyl propionate.

In addition, the cyclic ester-based organic solvent may include at least one organic solvent selected from $\gamma$-butyrolactone, $\gamma$-valerolactone, $\gamma$-caprolactone, $\sigma$-valerolactone, and $\varepsilon$-caprolactone.

The organic solvent may be used without limitation by adding organic solvents commonly used in the non-aqueous electrolyte 140 as needed. For example, the organic solvent may additionally include at least one organic solvent selected from an ether-based organic solvent, a glyme-based solvent, and a nitrile-based organic solvent.

The ether-based solvent may include any one selected from dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent has a high dielectric constant and low surface tension compared to the linear carbonate-based solvent, and has low reactivity with metals, and may include at least one selected from dimethoxyethane (glyme, DME), diethoxyethane, diglyme, tri-glyme, and tetra-glyme (TEGDME), but is not limited thereto.

The nitrile-based solvent may include at least one selected from acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The non-aqueous electrolyte 140 of the present disclosure may additionally include a known electrolyte additive as needed to prevent or suppress the non-aqueous electrolyte 140 from being decomposed and causing a negative electrode collapse in a high-power environment, or to further improve low-temperature high-rate discharge characteristics, high-temperature stability, overcharge prevention, and high-temperature battery expansion suppression effects.

The other additives may include at least one SEI film-forming additive selected from cyclic carbonate-based compounds, sultone-based compounds, sulfate-based compounds, phosphate-based compounds, borate-based compounds, nitrile-based compounds, benzene-based compounds, amine-based compounds, silane-based compounds, and lithium salt-based compounds, as representative examples.

The cyclic carbonate-based compounds may include vinylene carbonate (VC), vinylethylene carbonate, or fluoroethylene carbonate.

The sultone-based compound may be at least one compound selected from 1,3-propane sultone (PS), 1,4-butane sultone, ethene sultone, 1,3-propene sultone (PRS), 1,4-butene sultone, and 1-methyl-1,3-propene sultone.

The sulfate-based compound may be ethylene sulfate (Esa), trimethylene sulfate (TMS), or methyl trimethylene sulfate (MTMS).

The phosphate-based compound may be at least one compound selected from lithium difluoro(bisoxalato) phosphate, lithium difluorophosphate, tris(trimethylsilyl) phosphate, tris(trimethylsilyl) phosphite, tris(2,2,2-trifluoroethyl) phosphate, and tris(2,2,2-trifluoroethyl) phosphite.

The borate-based compound may be tetramphenyl borate, lithium oxalyldifluoroborate (LiODFB), or lithium bis(oxalato)borate ($LiB(C_2O_4)_2$; LiBOB).

The nitrile-based compound may be at least one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte, and may be lithium difluorophosphate (LiDFP; $LiPO_2F_2$) or $LiBF_4$.

Among these other electrolyte additives, when a combination of vinylene carbonate (VC), 1,3-propane sultone (PS), and ethylene sulfate (Esa) is additionally included, a more solid SEI film may be formed on the surface of the negative electrode during the initial activation process of the secondary battery, and gas generation that may be generated due to decomposition of the electrolyte at high temperatures may be suppressed, so that the high-temperature stability of the lithium secondary battery 100 may be improved.

The other electrolyte additives may be used in a mixture of two or more, and may be included in an amount of 0.1 wt% to 10 wt%, for example, 0.2 wt% to 8 wt%, or 0.5 wt% to 8 wt%, based on the total weight of the non-aqueous electrolyte. When the content of the other electrolyte additives satisfies the above range, the effect of improving ionic conductivity and cycle characteristics is more excellent.

Lithium Secondary Battery

The present disclosure also provides a lithium secondary battery 100 including the non-aqueous electrolyte 140.

As described above, the lithium secondary battery 100 may include a positive electrode 110, a negative electrode 120, and the non-aqueous electrolyte 140 described above.

The lithium secondary battery 100 may include a positive electrode 110 including a positive electrode active material, a negative electrode 120 including a negative electrode active material, a separator 130 interposed between the positive electrode and the negative electrode, and the non-aqueous electrolyte 140 described above.

The lithium secondary battery 100 of the present disclosure may be manufactured according to a conventional method known in the art. For example, an electrode assembly may be formed by sequentially stacking the positive electrode 110, the negative electrode 120, and the separator 130 between the positive electrode 110 and the negative electrode 120, then inserting the electrode assembly into a battery case 150, and injecting the non-aqueous electrolyte 140 according to the present disclosure.

(1) Positive Electrode

The positive electrode 110 may include a positive electrode active material.

The positive electrode 110 may include a positive electrode current collector, and a positive electrode active material layer disposed on at least one surface of the positive electrode current collector. The positive electrode active material layer may include the positive electrode active material. The positive electrode active material layer may further include at least one of a binder and a conductive material, together with the positive electrode active material.

The positive electrode 110 may be manufactured by coating a positive electrode mixture slurry including a positive electrode active material, a binder, a conductive material, and a solvent on a positive electrode current collector.

The positive electrode current collector is not particularly limited as long as it has conductivity without causing chemical changes in the battery, and examples thereof include stainless steel, aluminum, nickel, titanium, calcined carbon, and aluminum or stainless steel surface-treated with carbon, nickel, titanium, or silver.

The positive electrode active material is a compound capable of reversible intercalation and deintercalation of lithium, and specifically may include a lithium metal oxide containing lithium and one or more metals such as cobalt, manganese, nickel, or aluminum. For example, the lithium transition metal oxide include lithium-manganese oxides (*e.g.*, $LiMnO_2$ and $LiMn_2O_4$), lithium-cobalt oxides (*e.g.*, $LiCoO_2$), lithium-nickel oxides (*e.g.*, $LiNiO_2$), lithium-nickel-manganese oxides (*e.g.*, $LiNi_{1-Y}Mn_YO_2$ (wherein, $0<Y<1$) and $LiMn_{2-z}Ni_zO_4$ (wherein, $0<Z<2$)), lithium-nickel-cobalt oxides (*e.g.*, $LiNi_{1-Y1}Co_{Y1}O_2$ (wherein, $0<Y1<1$)), lithium-manganese-cobalt oxides (*e.g.*, $LiCo_{1-Y2}Mn_{Y2}O_2$ (wherein, $0<Y2<1$), $LiMn_{2-z1}Co_{z1}O_4$ (wherein, $0<Z1<2$)), lithium-nickel-manganese-cobalt oxides (*e.g.*, $Li(Ni_pCo_qMn_r)O_2$ (wherein, $0<p<1$, $0<q<1$,

$0<r<1$, $p+q+r=1$) or $Li(Ni_{p1}Co_{q1}Mn_{r1})O_4$ (wherein, $0<p1<2$, $0<q1<2$, $0<r1<2$, $p1+q1+r1=2$)), or lithium-nickel-cobalt-transition metal (M) oxides (*e.g.*, $Li(Ni_{p2}Co_{q2}Mn_{r2}M_{S2})O_2$ (wherein, M is selected from Al, Fe, V, Cr, Ti, Ta, Mg, and Mo, and p2, q2, r2 and s2 are atomic fractions of independent elements and satisfy $0<p2<1$, $0<q2<1$, $0<r2<1$, $0<s2<1$, $p2+q2+r2+s2=1$)), and may include one or more compounds thereof.

Among these, in terms of improving the capacity characteristics and stability of the battery, the lithium metal oxide may be $LiCoO_2$, $LiMnO_2$, $LiNiO_2$, lithium nickel manganese cobalt oxide (*e.g.*, $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$), $Li(Ni_{0.7}Mn_{0.15}Co_{0.15})O_2$, and $Li(Ni_{0.8}Mn_{0.1}Co_{0.1})O_2$), lithium nickel cobalt aluminum oxide (*e.g.*, $Li(Ni_{0.8}Co_{0.15}Al_{0.05})O_2$), or lithium nickel manganese cobalt aluminum oxide (*e.g.*, $Li(Ni_{0.86}Co_{0.05}Mn_{0.07}Al_{0.02})O_2$), and mixtures of any one or more thereof may be used.

Among these, a positive electrode active material having a nickel content of 80 atm% or more may be used in terms of maximizing the capacity characteristics of the battery. For example, the lithium transition metal oxide may include one represented by Formula 5:

[Formula 5] $$Li_xNi_aCo_bM^1_cM^2_dO_2$$

In Formula 5, $M^1$ may be at least one selected from MN and Al, and may be MN or a combination of MN and Al in terms of durability.

The symbol "$M^2$" may be selected from Zr, B, W, Mg, Ce, Hf, Ta, La, Ti, Sr, Ba, F, P, and S.

The symbol "x" represents an atomic fraction of lithium in the lithium transition metal oxide, and may be in the range of $0.90\leq x\leq 1.1$, or $0.95\leq x\leq 1.08$, or $1.0\leq x\leq 1.08$.

The symbol "a" represents an atomic fraction of nickel among the metal elements excluding lithium in the lithium transition metal oxide, and may be in the range of $0.80\leq a<1.0$, or $0.80\leq a\leq 0.95$, or $0.80\leq a\leq 0.90$. When the nickel content satisfies the above range, the high-capacity characteristic may be implemented.

The symbol "b" represents an atomic fraction of cobalt among the metal elements excluding lithium in the lithium transition metal oxide, and may be in the range of $0<b<0.2$, $0<b\leq 0.15$, or $0.01\leq b\leq 0.10$.

The symbol "c" represents an atomic fraction of $M^1$ among the metal elements excluding lithium in the lithium transition metal oxide, and may be in the range of $0<c<0.2$, $0<c\leq 0.15$, or $0.01\leq c\leq 0.10$.

The symbol "d" represents an atomic fraction of $M^2$ among the metal elements excluding lithium in the lithium transition metal oxide, and may be in the range of $0\leq d\leq 0.1$, or $0\leq d\leq 0.05$.

The positive electrode active material may be included in an amount of 60 wt% to 99 wt%, for example, 70 wt% to 99 wt%, or 80 wt% to 98 wt% based on the total weight of solids excluding the solvent in the positive electrode mixture slurry.

The binder is a component that aids in bonding of active materials and conductive materials, and bonding to the current collector.

Examples of the binder include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene (PE), polypropylene, ethylene-propylene-diene monomer, sulfonated ethylene-propylene-diene monomer, styrene-butadiene rubber, fluororubber, and various copolymers.

Typically, the binder may be included in an amount of 1 wt% to 20 wt%, for example, 1 wt% to 15 wt%, or 1 wt% to 10 wt% based on the total weight of solids excluding the solvent in the positive electrode mixture slurry.

The conductive material is a component for further improving the conductivity of the positive electrode active material, and may be added in an amount of 1 wt% to 20 wt% based on the total weight of the solids in the positive electrode mixture slurry. The conductive material is not particularly limited as long as it is conductive without causing chemical changes in the battery, and examples thereof include carbon powders such as carbon black, acetylene black, Ketjen black, channel black, furnace black, lamp black, and thermal black; graphite powders such as natural graphite, artificial graphite, and graphite with a highly developed crystal structure; conductive fibers such as carbon fiber and metal fiber; fluorinated carbon powders; conductive powders such as aluminum powder and nickel powder; conductive whiskers such as zinc oxide and potassium titanate; conductive metal oxides such as titanium oxide; conductive substances such as polyphenylene derivatives.

Typically, the conductive material may be included in an amount of 1 wt% to 20 wt%, for example, 1 wt% to 15 wt%, or 1 wt% to 10 wt% based on the total weight of solids excluding the solvent in the positive electrode mixture slurry.

The solvent may include an organic solvent such as NMP (N-methyl-2-pyrrolidone), and may be used in an amount that provides an appropriate viscosity when including the positive electrode active material, and optionally a binder and a conductive material. For example, the concentration of the solids including the positive electrode active material, and optionally a binder and a conductive material may be included to be 50 wt% to 95 wt%, for example, 70 wt% to 95 wt%, or 70 wt% to 90 wt%.

(2) Negative Electrode

The negative electrode 120 may include a negative electrode active material.

The negative electrode 120 may include a negative electrode current collector, and a negative electrode active material layer disposed on at least one surface of the negative electrode current collector. The negative electrode active material layer may include the negative electrode active material. The negative electrode active material layer may further include at least one of a binder and a conductive material, together with the negative electrode active material.

The negative electrode 120 may be manufactured, for example, by coating a negative electrode mixture slurry containing a negative electrode active material, a binder, a conductive material, and a solvent on a negative electrode current collector. Alternatively, a graphite electrode made of carbon (C) or the metal itself may be used as the negative electrode 120.

For example, when the negative electrode 120 is manufactured by coating a negative electrode mixture slurry on the negative electrode current collector, the negative electrode current collector generally has a thickness of 3 μm to 500 μm. The negative electrode current collector is not particularly limited as long as it has high conductivity without causing chemical changes in the battery, and examples thereof include copper, stainless steel, aluminum, nickel, titanium, calcined carbon, copper or stainless steel subjected to surface treatment with carbon, nickel, titanium, or silver, and aluminum-cadmium alloys. In addition, as in the positive electrode current collector, the negative electrode current collector may have fine irregularities formed on the surface to strengthen the bonding power of the negative electrode active material, and may be used in various forms such as films, sheets, foils, nets, porous materials, foams, and non-woven materials.

Further, the negative electrode active material may include at least one selected from lithium metal, a carbon material capable of reversibly intercalating/deintercalating lithium ions, a metal or an alloy of the metal and lithium, a metal composite oxide, a material capable of doping and de-doping lithium, and a transition metal oxide.

As for the carbon material capable of reversibly intercalating/deintercalating lithium ions, any carbon-based negative electrode active material generally used in lithium ion secondary batteries may be used without particular limitation, and representative examples thereof include crystalline carbon, amorphous carbon, or a combination thereof. Examples of the crystalline carbon include graphite, such as natural or artificial graphite in amorphous, plate, flake, spherical, or fibrous form, and examples of the amorphous carbon include soft carbon (low temperature calcined carbon) or hard carbon, mesoporous pitch carbide, and calcined coke.

The metal or alloy of the metal and lithium may be a metal selected from Cu, Ni, Na, K, Rb, Cs, Fr, Be, Mg, Ca, Sr, Si, Sb, Pb, In, Zn, Ba, Ra, Ge, Al, and Sn, or an alloy of these metals and lithium.

The metal composite oxide may be one selected from PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \le x \le 1$), $Li_xWO_2$ ($0 \le x \le 1$), and $Sn_xMe_{1-x}Me'_yO_z$ (Me: MN, Fe, Pb, GE; Me': Al, B, P, Si, elements of group 1, group 2, group 3 of the periodic table, halogen; $0<x\le 1$; $1\le y\le 3$; $1\le z\le 8$).

The materials capable of doping and de-doping the lithium include Si, $SiO_x$ ($0<x\le 2$), a Si-Y alloy (wherein Y is an element selected from an alkali metal, an alkaline earth metal, a Group 13 element, a Group 14 element, a transition metal, a rare earth element, and a combination thereof, but not Si), Sn, $SnO_2$, a silicon-carbon composite (SiC composite), and Sn-Y (wherein Y is an element selected from an alkali metal, an alkaline earth metal, a Group 13 element, a Group 14 element, a transition metal, a rare earth element, and a combination thereof, but not Sn). In addition, a mixture of at least one of these with $SiO_2$ may be used. The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The transition metal oxide may include lithium-containing titanium composite oxide (LTO), vanadium oxide, and lithium vanadium oxide.

According to one embodiment, the negative electrode active material may include at least one of graphite and $SiO_x$ ($0\le x<2$). For example, the negative electrode active material may include graphite and $SiO_x$ ($0\le x<2$). When the negative electrode active material includes graphite and $SiO_x$ ($0\le x<2$), the graphite and $SiO_x$ ($0\le x<2$) may be included in a weight ratio of 99:1 to 70:30 in terms of increasing the capacity of the lithium secondary battery.

The negative electrode active material may be included in an amount of 60 wt% to 99 wt%, for example, 70 wt% to 99 wt%, or 80 wt% to 98 wt% based on the total weight of solids excluding the solvent in the negative electrode mixture slurry.

The binder is a component that aids in bonding between the conductive material, the active material, and the current collector. Examples of the binders include, but are not limited to, polyvinylidene fluoride (PVDF), polyvinyl alcohol, carboxymethyl cellulose (CMC), starches, hydroxypropyl cellulose, regenerated cellulose, polyvinyl pyrrolidone, polytetrafluoroethylene, polyethylene, ethylene-propylene-diene monomer, sulfonated ethylene-propylene-diene monomer, styrene-butadiene rubber, fluorine rubber, and various copolymers thereof.

Typically, the binder may be included in an amount of 1 wt% to 20 wt%, for example, 1 wt% to 15 wt%, or 1 wt% to 10 wt% based on the total weight of solids excluding the solvent in the negative electrode mixture slurry.

The conductive material is a component for further improving the conductivity of the negative electrode active

material, and may be added in an amount of 1 wt% to 20 wt% based on the total weight of solids in the negative electrode mixture slurry. The conductive material is not particularly limited as long as it is conductive without causing chemical changes in the battery, and examples thereof include carbon powders such as carbon black, acetylene black, Ketjen black, channel black, furnace black, lamp black, and thermal black; graphite powders such as natural graphite, artificial graphite, and graphite with a highly developed crystal structure; conductive fibers such as carbon fiber and metal fiber; fluorinated carbon powders; conductive powders such as aluminum powder and nickel powder; conductive whiskers such as zinc oxide and potassium titanate; conductive metal oxides such as titanium oxide; conductive materials such as polyphenylene derivatives.

Typically, the conductive material may be included in an amount of 1 wt% to 20 wt%, for example, 1 wt% to 15 wt%, or 1 wt% to 10 wt% based on the total weight of solids excluding the solvent in the negative electrode mixture slurry.

The solvent may include water or an organic solvent such as NMP (N-methyl-2-pyrrolidone), and may be used in an amount that provides an appropriate viscosity when including the negative active material, and optionally a binder and a conductive material. For example, the concentration of the solids including the negative active material, and optionally a binder and a conductive material may be included to be 50 wt% to 95 wt%, for example, 70 wt% to 90 wt%.

When the metal itself is used, the negative electrode 120 may be manufactured by physically bonding, rolling, or depositing the metal onto the metal thin film itself or on the negative electrode current collector. The deposition method may use an electrical deposition method or a chemical vapor deposition method.

For example, the metal bonded/rolled/deposited on the metal film itself or the negative electrode current collector may include one metal selected from lithium (Li), nickel (Ni), tin (Sn), copper (Cu), and indium (In), or an alloy of two metals.

(3) Separator

The separator 130 may be made with a porous polymer film commonly used as a conventional separator such as, for example, a porous polymer film made of a polyolefin polymer such as an ethylene homopolymer, a propylene homopolymer, an ethylene/butene copolymer, an ethylene/hexene copolymer, and an ethylene/methacrylate copolymer, which may be used alone or in a laminated manner, or may be made with a conventional porous nonwoven fabric such as, for example, a nonwoven fabric made of high-melting-point glass fiber, polyethylene terephthalate fiber, and the like, but is not limited thereto. Further, a coated separator containing ceramic components or polymer materials may be used to ensure heat resistance or mechanical strength, and may optionally be used in a single-layer or multi-layer structure.

The shape of the lithium secondary battery 100 of the present disclosure is not particularly limited, but may be cylindrical, square, pouch, or coin-shaped, using a can.

Hereinafter, the present disclosure will be described through examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

MODE FOR CARRYING OUT THE INVENTION

Hereinafter, the present disclosure will be described through examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

EXAMPLE

Example 1

(Preparation of Non-aqueous Electrolyte)

$LiPF_6$ was dissolved in an organic solvent (ethylene carbonate (EC): ethyl methyl carbonate (EMC) = 20:80 volume ratio) to make 1.2 M to prepare a non-aqueous solvent, and 0.05 g of a compound of Formula 1a below was added to 99.95 g of the non-aqueous solvent to prepare a non-aqueous electrolyte.

[Formula 1a]

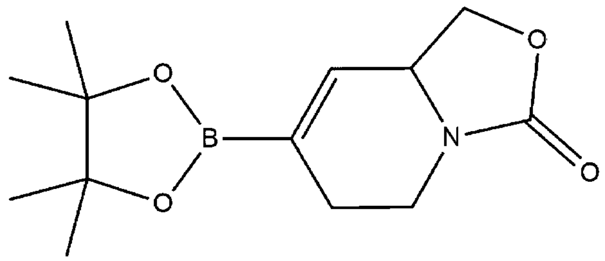

(Manufacturing of Lithium Secondary Battery)

A positive electrode active material ($LiNi_{0.90}Co_{0.03}Mn_{0.06}Al_{0.01}O_2$), a conductive material (carbon black), and a binder (polyvinylidene fluoride) were added to a solvent, N-methyl-2-pyrrolidone (NMP) in a weight ratio of 97.5:1.3:1.2 to prepare a positive electrode slurry (solid content: 74 wt%). The positive electrode slurry was applied to one side of a positive electrode current collector (Al thin film) having a thickness of 130 μm, dried, and roll pressed to prepare a positive electrode.

A negative electrode active material (graphite:SiO = 97:3 in weight ratio), a conductive material (carbon black), and a binder (polyvinylidene fluoride) were added to a solvent, N-methyl-2-pyrrolidone (NMP) in a weight ratio of 96.8:0.2:3.0 to prepare a negative electrode slurry (solid content: 60 wt%). The negative electrode slurry was applied to one side of a negative electrode current collector (Cu thin film) having a thickness of 128 μm, dried, and roll pressed to prepare a negative electrode.

A porous polymer separator made of a polyolefin-based polymer was interposed between the positive and negative electrodes prepared above in a dry room, and then the non-aqueous electrolyte prepared above was injected to manufacture a secondary battery.

Example 2

A secondary battery was manufactured in the same manner as in Example 1, except that 5 g of the compound of Formula 1a above was added to 95 g of the non-aqueous solvent prepared in Example 1 to prepare a non-aqueous electrolyte.

Example 3

A secondary battery was manufactured in the same manner as in Example 1, except that 10 g of the compound of Formula 1a above was added to 90 g of the non-aqueous solvent prepared in Example 1 to prepare a non-aqueous electrolyte.

Example 4

A secondary battery was manufactured in the same manner as in Example 1, except that 5 g of the compound of Formula 1b below was added to 95 g of the non-aqueous solvent prepared in Example 1 to prepare a non-aqueous electrolyte.

[Formula 1b]

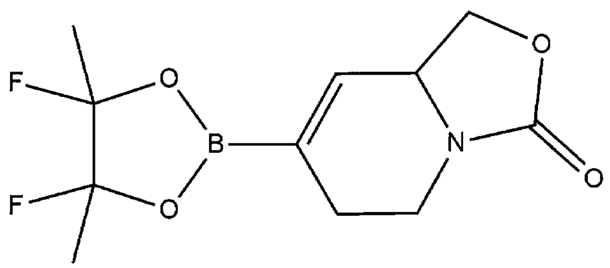

Example 5

A secondary battery was manufactured in the same manner as in Example 1, except that 5 g of the compound of Formula 1c below was added to 95 g of the non-aqueous solvent prepared in Example 1 to prepare a non-aqueous electrolyte.

[Formula 1c]

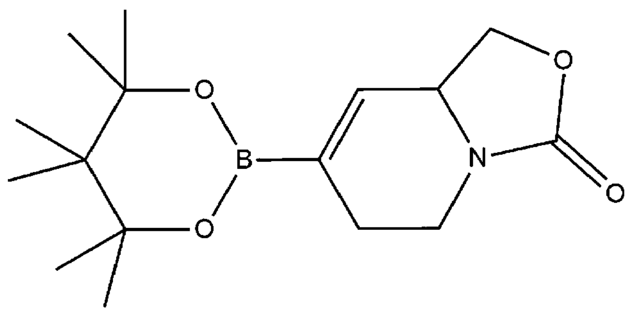

Example 6

A secondary battery was manufactured in the same manner as in Example 1, except that 5 g of the compound of Formula 1d below was added to 95 g of the non-aqueous solvent prepared in Example 1 to prepare a non-aqueous electrolyte.

[Formula 1d]

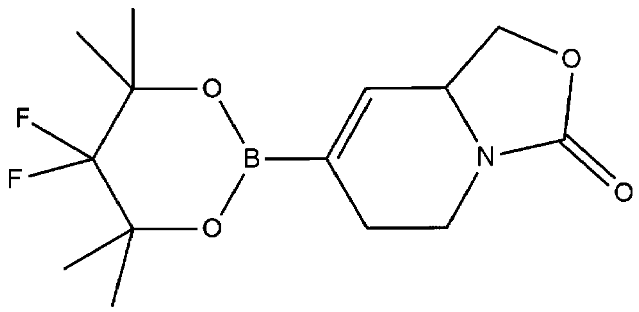

Example 7

A secondary battery was manufactured in the same manner as in Example 1, except that 5 g of the compound of Formula 2a below was added to 95 g of the non-aqueous solvent prepared in Example 1 to prepare a non-aqueous electrolyte.

[Formula 2a]

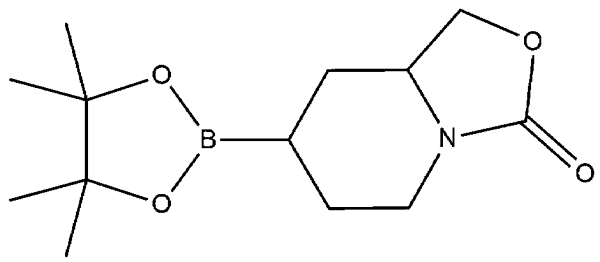

Example 8

A secondary battery was manufactured in the same manner as in Example 1, except that 5 g of the compound of Formula 3a below was added to 95 g of the non-aqueous solvent prepared in Example 1 to prepare a non-aqueous electrolyte.

[Formula 3a]

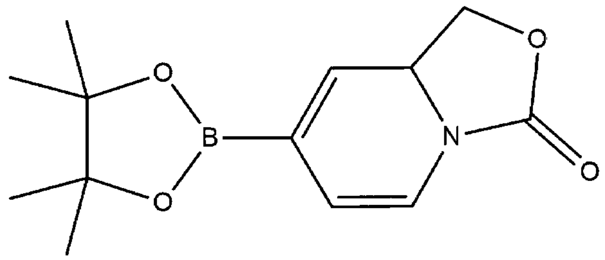

Example 9

A secondary battery was manufactured in the same manner as in Example 1, except that 5 g of the compound of Formula 4a below was added to 95 g of the non-aqueous solvent prepared in Example 1 to prepare a non-aqueous electrolyte.

[Formula 4a]

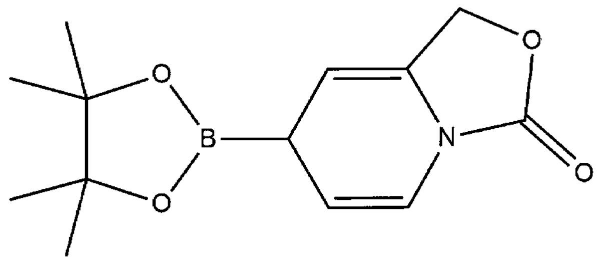

Comparative Example 1

A secondary battery was manufactured in the same manner as in Example 1, except that a non-aqueous electrolyte was prepared using 100 g of the non-aqueous solvent prepared in Example 1. For example, in Comparative Example 1, a secondary battery was manufactured without using any additives for the non-aqueous electrolyte according to the present disclosure.

<u>Experimental Example 1 - Evaluation of high temperature cycle characteristics</u>

For each of the secondary batteries manufactured in Examples 1 to 9 and Comparative Example 1, cycle characteristics were evaluated.

Each of the batteries manufactured in Examples 1 to 9 and Comparative Example 1 was subjected to 200 cycles, each of which includes charging to 4.4 V, 0.05 C at 45 °C under conditions of constant current (CC)/constant voltage (CV), 0.33 C, and discharging to 2.5 V under conditions of CC, 0.33 C. Then, the capacity retention rate after 200 cycles was measured compared to the initial capacity after 1 cycle.

Capacity retention rate (%)={(discharge capacity after 200 cycles/discharge capacity after 1 cycle)} x 100

In addition, the resistance increase rate after 8 weeks of storage compared to the initial resistance was measured. Meanwhile, before storage, the stage of charge (SOC) of the secondary battery was adjusted to 50%, and then a pulse of 2.5 C was applied for 10 seconds, and the initial resistance was calculated through the difference between the voltage before the pulse application and the voltage after the pulse application. After 8 weeks, the resistance of the

preserved secondary battery was measured using the same method, and the increased resistance during the 8-week storage period was calculated. The resistance increase rate after 8 weeks was derived by calculating the percentage ratio of the increased resistance with respect to the initial resistance of the secondary battery.

In addition, the resistance increase rate after 200 cycles compared to the initial resistance was measured. Specifically, the discharge capacity after one cycle was measured using the electrochemical charger/discharger, the SOC was adjusted to 50%, and then, a pulse of 2.5 C was applied for 10 seconds to calculate the initial resistance from the difference between the voltage before the pulse application and the voltage after the pulse application. After 200 cycles of charging/discharging, the resistance of the secondary battery was measured using the same method, and the increased resistance during 200 cycles was calculated. The percentage ratio of the increased resistance to the initial resistance of the secondary battery was calculated to derive the resistance increase rate after 8 weeks.

Resistance increase rate (%)=(resistance after 200 cycles-initial resistance)/(initial resistance) x 100

The results are indicated in Table 1 below.

[Table 1]

| | Capacity Retention Rate (%) | Resistance Increase rate (%) |
|---|---|---|
| Example 1 | 91 | 9 |
| Example 2 | 93 | 7 |
| Example 3 | 92 | 8 |
| Example 4 | 92 | 7 |
| Example 5 | 91 | 10 |
| Example 6 | 92 | 9 |
| Example 7 | 93 | 8 |
| Example 8 | 92 | 8 |
| Example 9 | 92 | 7 |
| Comparative Example 1 | 61 | 47 |

As indicated in Table 1, the capacity retention rates of the secondary batteries of Examples 1 to 9 were 91% to 93%, which were significantly superior to 61% of Comparative Example 1. In addition, the resistance increase rates of the secondary batteries of Examples 1 to 9 were 7% to 10%, which were significantly superior to 47% of Comparative Example 1. As a result, the secondary batteries of Examples 1 to 9 including about 0.1 wt% to 10 wt% of the electrolyte additive had superior high-temperature cycle characteristics in terms of capacity retention rate and resistance increase rate, compared to the secondary battery of Comparative Example 1 that did not include the electrolyte additive.

Experimental Example 2 - Evaluation of high temperature storage characteristics

For each of the secondary batteries manufactured in Examples 1 to 9 and Comparative Example 1, high temperature storage characteristics were evaluated.

For example, the lithium secondary batteries manufactured in Examples 1 to 9 and Comparative Example 1 were charged to 4.4 V, 0.05 C at 25 °C under conditions of CC/CV, 0.33 C and discharged to 2.5 V under conditions of CC, 0.33 C to perform initial charge/discharge, and then charged to 4.4 V, 0.05 C at 25 °C under conditions of CC/CV, 0.33 C and stored at 60 °C for 8 weeks.

Prior to storage, the capacity of the fully charged secondary battery was measured and set as the initial capacity of the secondary battery. After 8 weeks, the capacity of the stored secondary battery was measured and the capacity decreased during the 8-week storage period was calculated. The capacity maintenance rate after 8 weeks was derived by calculating the percentage ratio of the reduced capacity to the initial capacity of the secondary battery.

Capacity maintenance rate (%) = (discharge capacity after 8 weeks of storage/initial discharge capacity) $\times$ 100

In addition, the resistance increase rate after 8 weeks of storage compared to the initial resistance was measured. Specifically, before storage, the SOC of the secondary battery was adjusted to 50%, and then a pulse of

2.5 C was applied for 10 seconds, and the initial resistance was calculated through the difference between the voltage before the pulse application and the voltage after the pulse application. After 8 weeks, the resistance of the preserved secondary battery was measured using the same method, and the increased resistance during the 8-week storage period was calculated. The percentage ratio of the increased resistance to the initial resistance of the secondary battery was calculated to derive the resistance increase rate after 8 weeks.

Resistance increase rate (%)=(resistance after 8 weeks-initial resistance)/(initial resistance) x 100

The results are indicated in Table 2 below.

[Table 2]

| | Capacity Retention Rate (%) | Resistance Increase rate (%) |
|---|---|---|
| Example 1 | 95 | 7 |
| Example 2 | 96 | 8 |
| Example 3 | 95 | 7 |
| Example 4 | 95 | 7 |
| Example 5 | 96 | 7 |
| Example 6 | 94 | 6 |
| Example 7 | 95 | 8 |
| Example 8 | 94 | 7 |
| Example 9 | 95 | 7 |
| Comparative Example 1 | 85 | 16 |

As indicated in Table 2, the capacity retention rates of the secondary batteries of Examples 1 to 9 are 94% to 96%, which are significantly superior to 85% of Comparative Example 1. In addition, the resistance increase rates of the secondary batteries of Examples 1 to 9 were 6% to 8%, which were significantly superior to 16% of Comparative Example 1. As a result, it was confirmed that the secondary batteries of Examples 1 to 9 including 0.1 wt% to 10 wt% of the electrolyte additive had stable performance in terms of capacity retention rate and resistance increase rate at high temperatures compared to the secondary battery of Comparative Example 1 not including the electrolyte additive.

<u>Experimental Example 3 - Evaluation of Thermal Stability</u>

For each of the secondary batteries manufactured in Examples 1 to 9 and Comparative Example 1, thermal stability was evaluated.

For example, for the lithium secondary batteries manufactured in the above examples and comparative examples, an activation (formation) process was performed, and then charging (0.05 C cut off) was performed under constant current/constant voltage conditions up to 4.4 V at a 0.33 C rate at 25 °C to fully charge up to 100% SOC. The fully charged batteries were heated up to 140 °C at a heating rate of 5 °C/min, and then left for 1 hour to conduct a hot box evaluation experiment to check for ignition. When no ignition occurred, it was evaluated as Pass, and when ignition occurred, it was evaluated as Fail. The results are indicated in Table 3 below.

[Table 3]

| | Hot Box Test Result |
|---|---|
| Example 1 | Pass |
| Example 2 | Pass |
| Example 3 | Pass |
| Example 4 | Pass |
| Example 5 | Pass |
| Example 6 | Pass |

(continued)

| | Hot Box Test Result |
|---|---|
| Example 7 | Pass |
| Example 8 | Pass |
| Example 9 | Pass |
| Comparative Example 1 | Fail |

As indicated in Table 3 above, it was confirmed that the secondary batteries of Examples 1 to 9 had superior thermal stability compared to the secondary battery of Comparative Example 1 as a result of the hot box test.

FIG. 2 is a diagram for illustrating a vehicle 300 including a battery pack 200 constituted with the lithium secondary battery 100 of FIG. 1.

Referring to FIG. 2, the vehicle 300 according to one embodiment of the present disclosure may be, for example, an electric vehicle, a hybrid vehicle, or a plug-in hybrid vehicle, and includes the battery pack 200 made up of the lithium secondary battery 100 according to one embodiment of the present disclosure. The vehicle 300 includes a four-wheeled vehicle and a two-wheeled vehicle. The vehicle 300 operates by receiving power from the battery pack 200 according to one embodiment of the present disclosure.

While the technology of the present disclosure has been described with reference to embodiments, it may be appreciated by one skilled in the art of the present disclosure or one having ordinary skill in the art of the present disclosure that various modifications and changes may be made to the various embodiments of the present disclosure without departing from the technical scope of the various embodiments of the present disclosure defined in the claims attached herewith. Therefore, the technical scope of the various embodiments of the present disclosure is not limited to the detailed descriptions of the invention herein, but should be determined by the scope defined in the claims.

[Description of Symbols]

100: Lithium secondary battery
110: Positive electrode
120: Negative electrode
130: Separator
140: Non-aqueous electrolyte
150: Battery case
200: Battery pack
300: Vehicle

## Claims

**1.** A non-aqueous electrolyte comprising:

a lithium salt;
an organic solvent; and
an additive,
wherein the additive includes at least one selected from compounds represented by Formulas 1 to 4:

[Formula 1]

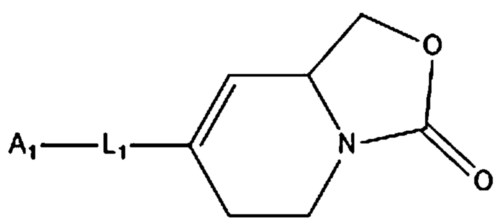

[Formula 2]

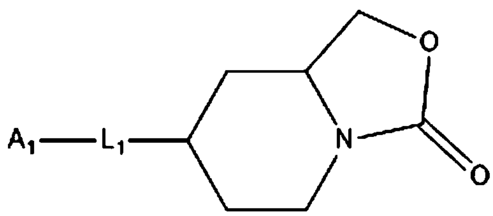

[Formula 3]

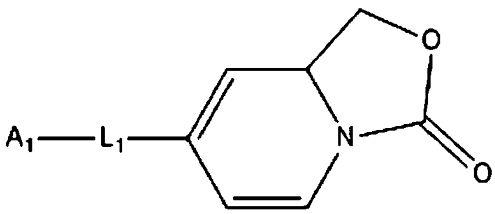

[Formula 4]

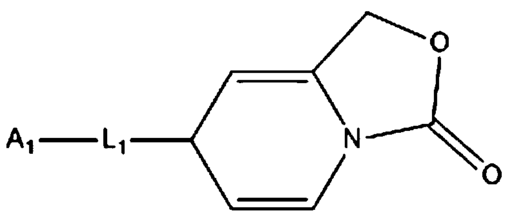

wherein,

$L_1$ is selected from a direct bond and an alkylene group having 1 to 10 carbon atoms which is unsubstituted or substituted with fluorine, and
$A_1$ is selected from groups represented by Formulas A-1 and A-2:

[Formula A-1]

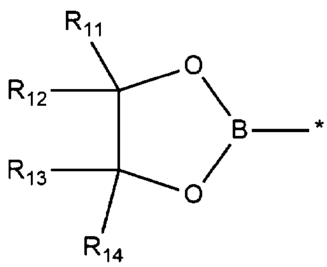

[Formula A-2]

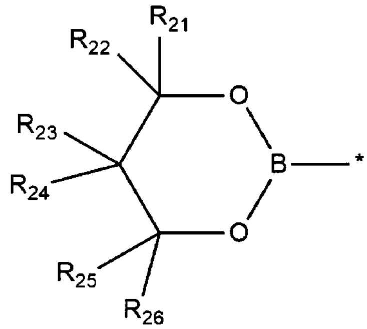

wherein,

$R_{11}$, $R_{12}$, $R_{13}$, $R_{14}$, $R_{21}$, $R_{22}$, $R_{23}$, $R_{24}$, $R_{25}$, and $R_{26}$ are each independently selected from H, F, an alkyl group having 1 to 5 carbon atoms, and an alkyl group having 1 to 5 carbon atoms substituted with one or more fluorine atoms, and
* is a bonding site.

**2.** The non-aqueous electrolyte according to claim 1, wherein $L_1$ is a direct bond.

**3.** The non-aqueous electrolyte according to claim 1, wherein A1 is represented by Formula A-1:

[Formula A-1]

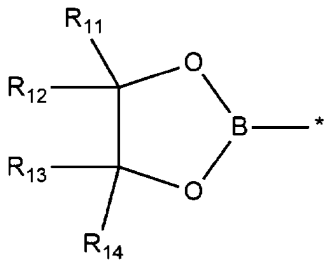

wherein, $R_{11}$, $R_{12}$, $R_{13}$, and $R_{14}$ are each independently selected from F or an alkyl group having 1 to 5 carbon atoms.

**4.** The non-aqueous electrolyte according to claim 1, wherein the compound represented by Formula 1 is one selected from compounds represented by Formulas 1a to 1f:

[Formula 1a]

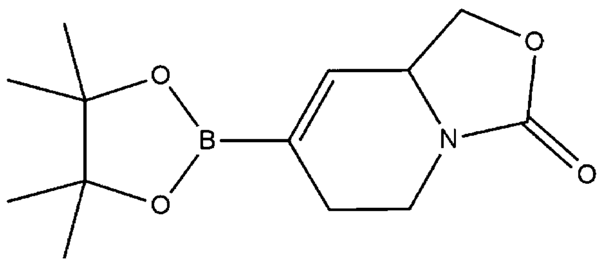

[Formula 1b]

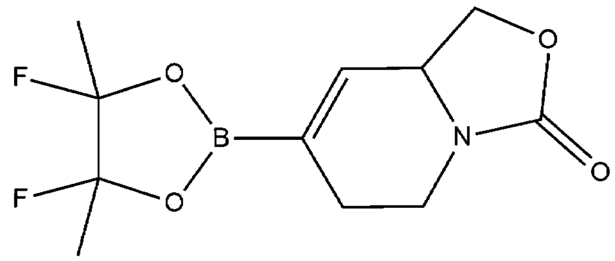

[Formula 1c]

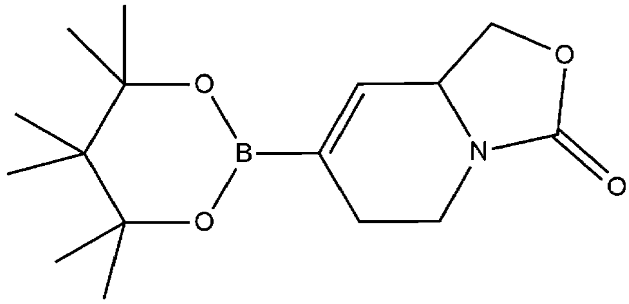

[Formula 1d]

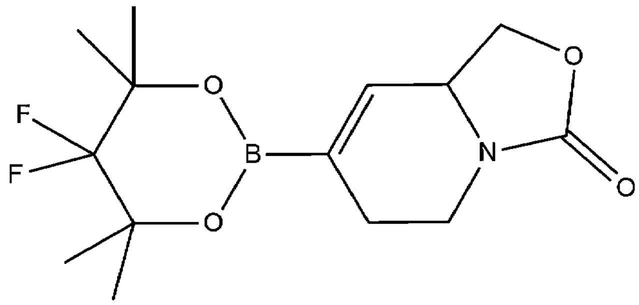

[Formula 1e]

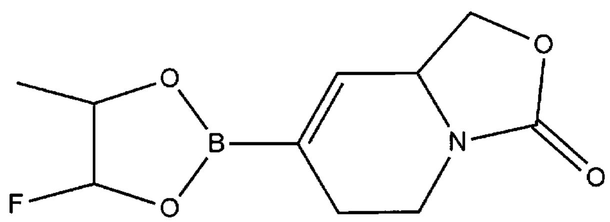

[Formula 1f]

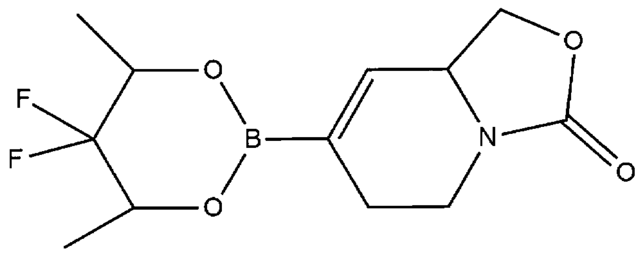

5. The non-aqueous electrolyte according to claim 1, wherein the compound represented by Formula 2 is one selected from compounds represented by Formulas 2a to 2f:

[Formula 2a]

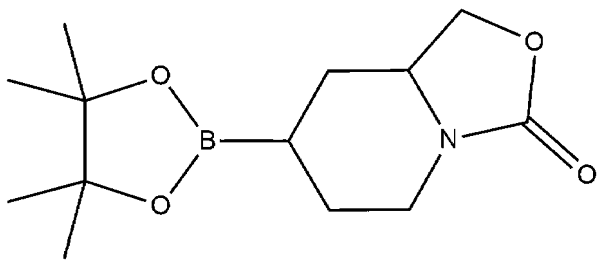

[Formula 2b]

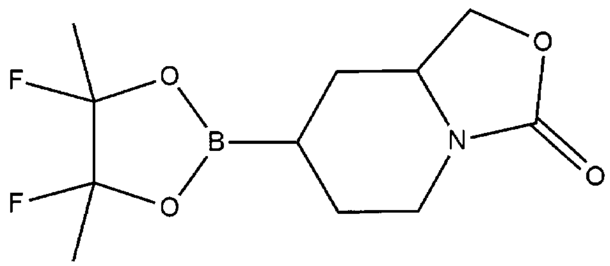

[Formula 2c]

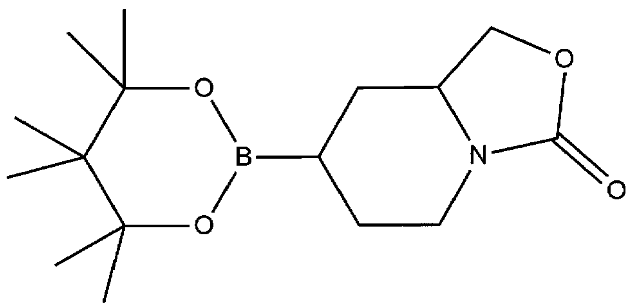

[Formula 2d]

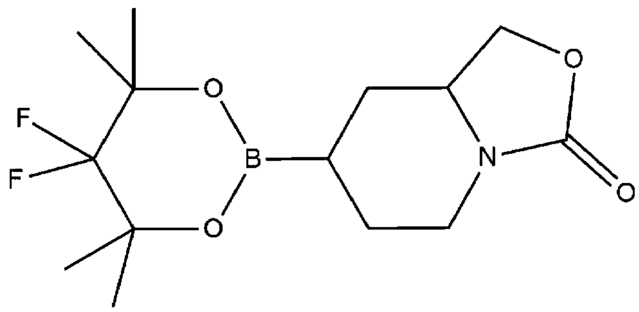

[Formula 2e]

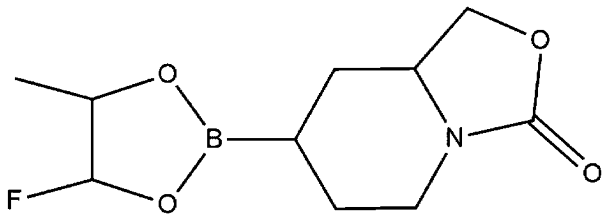

[Formula 2f]

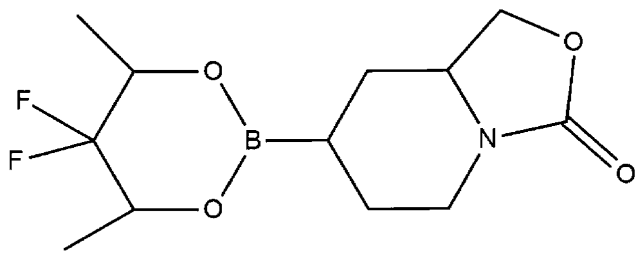

**6.** The non-aqueous electrolyte according to claim 1, wherein the compound represented by Formula 3 is one selected from compounds represented by Formulas 3a to 3f:

[Formula 3a]

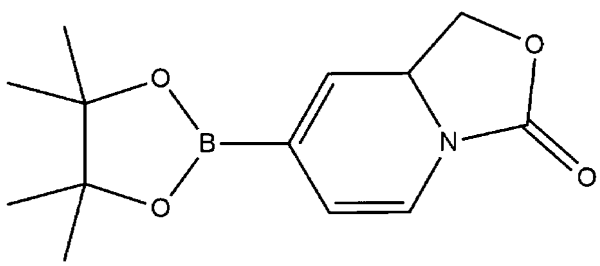

[Formula 3b]

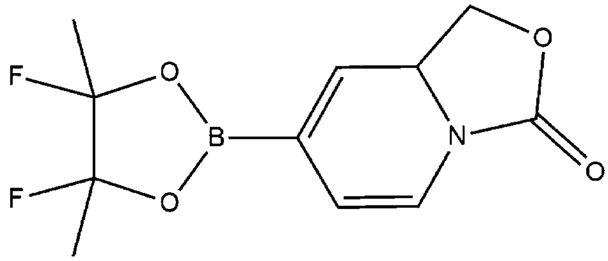

[Formula 3c]

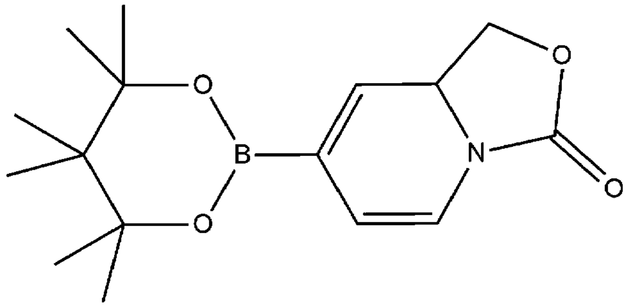

[Formula 3d]

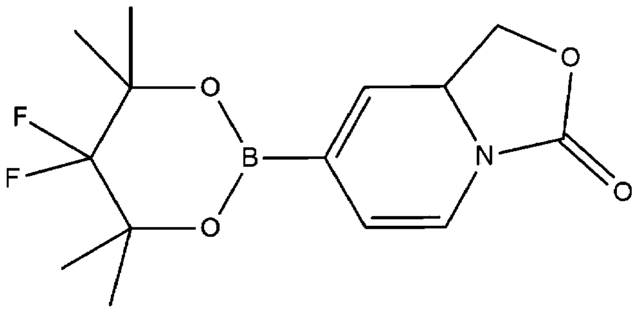

[Formula 3e]

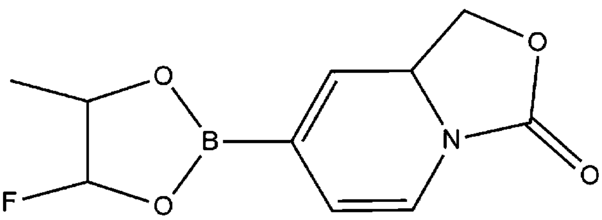

[Formula 3f]

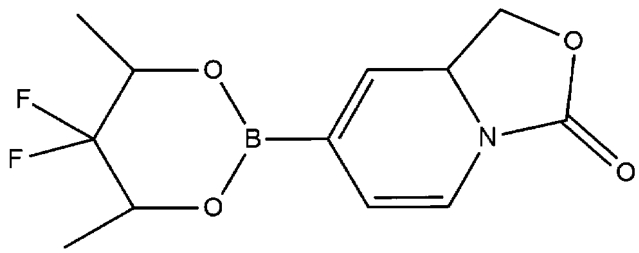

7. The non-aqueous electrolyte according to claim 1, wherein the compound represented by Formula 4 is one selected from compounds represented by Formulas 4a to 4d:

[Formula 4a]

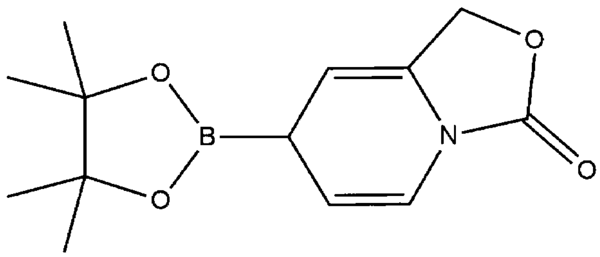

[Formula 4b]

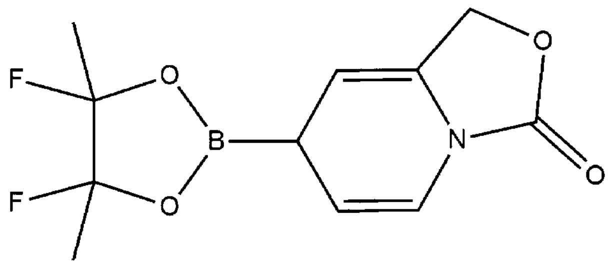

[Formula 4c]

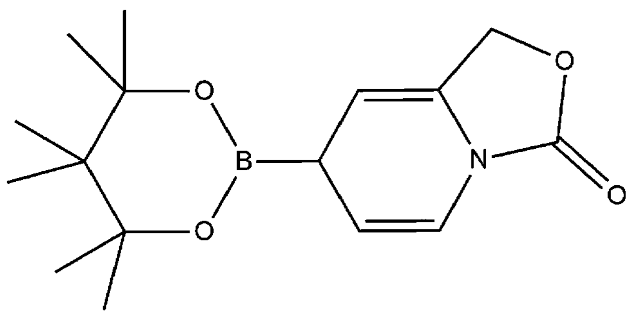

[Formula 4d]

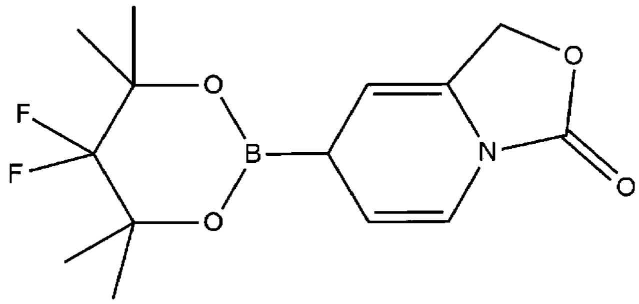

[Formula 4e]

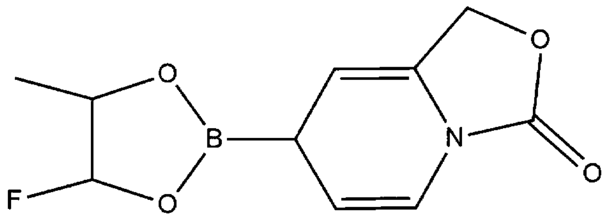

[Formula 4f]

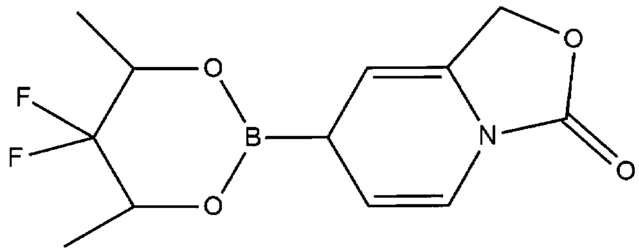

**8.** The non-aqueous electrolyte according to claim 1, wherein the compounds represented by Formulas 1 to 4 are included in an amount of 0.01 parts by weight to 10 parts by weight based on 100 parts by weight of the non-aqueous electrolyte.

**9.** The non-aqueous electrolyte according to claim 1, wherein the lithium salt is at least one selected from LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$, $LiN(SO_2CF_2CF_3)_2$, and $LiN(SO_2CF_3)_2$.

**10.** The non-aqueous electrolyte according to claim 1, wherein the lithium salt is included in a concentration of 0.5 M to 3 M.

**11.** The non-aqueous electrolyte according to claim 1, wherein the organic solvent includes at least one selected from a cyclic carbonate-based organic solvent, a linear carbonate-based organic solvent, a linear ester-based organic solvent, and a cyclic ester-based organic solvent.

**12.** A lithium secondary battery comprising:

a positive electrode;
a negative electrode; and
the non-aqueous electrolyte of claim 1.

**13.** The lithium secondary battery according to claim 12, wherein the positive electrode includes a positive electrode active material, and

the positive electrode active material includes a lithium nickel-cobalt-manganese-based oxide.

**14.** The lithium secondary battery according to claim 12, wherein the negative electrode includes a negative electrode active material, and
the negative electrode active material includes at least one of graphite and $SiO_x$ wherein $0 \leq x < 2$.

FIG. 1

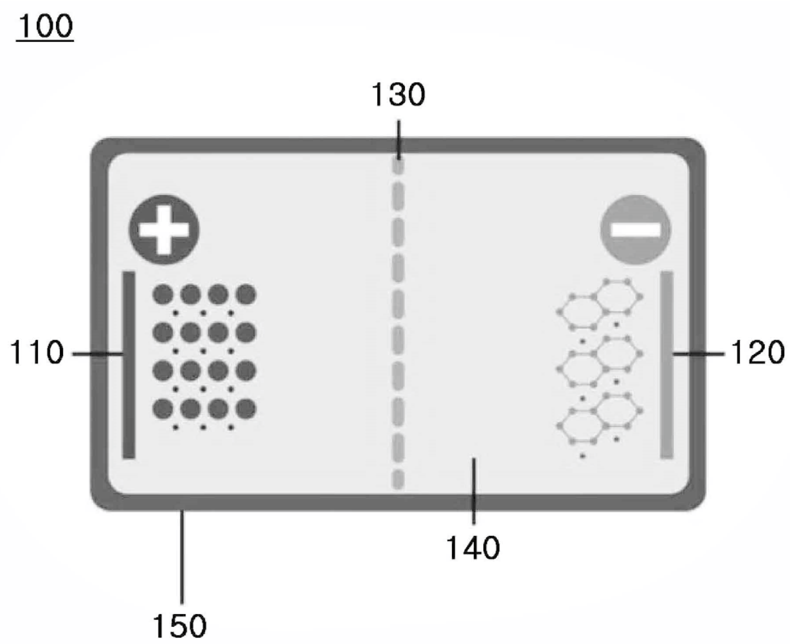

*FIG. 2*

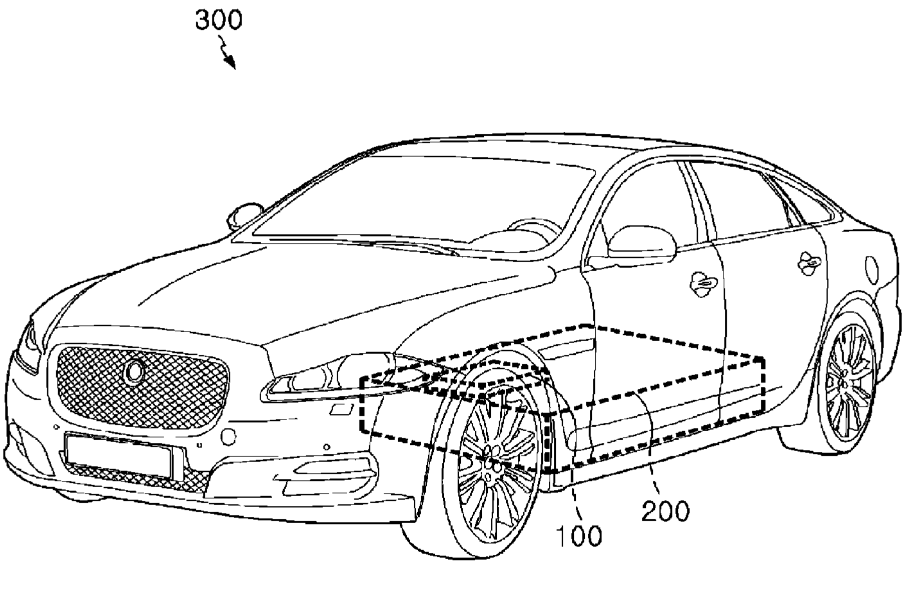

**INTERNATIONAL SEARCH REPORT**

International application No.
**PCT/KR2025/095228**

**A. CLASSIFICATION OF SUBJECT MATTER**

**H01M 10/0567**(2010.01)i; **H01M 10/052**(2010.01)i; **H01M 4/131**(2010.01)i; **H01M 4/525**(2010.01)i; **H01M 4/505**(2010.01)i; **H01M 4/133**(2010.01)i; **H01M 4/134**(2010.01)i; **H01M 4/36**(2006.01)i; **H01M 4/587**(2010.01)i; **H01M 4/48**(2010.01)i

According to International Patent Classification (IPC) or to both national classification and IPC

**B. FIELDS SEARCHED**

Minimum documentation searched (classification system followed by classification symbols)

H01M 10/0567(2010.01); A61K 31/437(2006.01); C07D 471/04(2006.01); C07D 471/16(2006.01); C07D 487/04(2006.01); H01M 10/052(2010.01); H01M 10/0525(2010.01); H01M 4/36(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 비수 전해질(non-aqueous electrolyte), 첨가제 (additives), 리튬이차전지(lithium secondary battery), 붕소(boron)

**C. DOCUMENTS CONSIDERED TO BE RELEVANT**

| Category* | Citation of document, with indication, where appropriate, of the relevant passages | Relevant to claim No. |
|---|---|---|
| A | KR 10-2024-0034596 A (LG CHEM, LTD.) 14 March 2024 (2024-03-14)<br>See claims 1-18. | 1-14 |
| A | US 2015-0218165 A1 (ABBVIE INC.) 06 August 2015 (2015-08-06)<br>See paragraphs [1316], [1371] and [1376]. | 1-14 |
| A | JP 2015-090785 A (TOYOTA INDUSTRIES CORP.) 11 May 2015 (2015-05-11)<br>See claims 1-3. | 1-14 |
| A | WO 2023-184489 A1 (CONTEMPORARY AMPEREX TECHNOLOGY CO., LIMITED) 05 October 2023 (2023-10-05)<br>See claims 1-21. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 July 2025** | **16 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2025/095228**

**C. DOCUMENTS CONSIDERED TO BE RELEVANT**

| Category* | Citation of document, with indication, where appropriate, of the relevant passages | Relevant to claim No. |
|---|---|---|
| A | WO 2023-184506 A1 (CONTEMPORARY AMPEREX TECHNOLOGY CO., LIMITED) 05 October 2023 (2023-10-05)<br>See claims 1-21. | 1-14 |
| A | WO 2014-139328 A1 (ABBVIE INC. et al.) 18 September 2014 (2014-09-18)<br>See entire document. | 1-14 |

Form PCT/ISA/210 (second sheet) (July 2022)

**INTERNATIONAL SEARCH REPORT**
**Information on patent family members**

International application No.
**PCT/KR2025/095228**

| Patent document cited in search report | Publication date (day/month/year) | Patent family member(s) | Publication date (day/month/year) |
|---|---|---|---|
| KR 10-2024-0034596 A | 14 March 2024 | None | |
| US 2015-0218165 A1 | 06 August 2015 | US 9328112 B2 | 03 May 2016 |
| | | WO 2015-119712 A1 | 13 August 2015 |
| JP 2015-090785 A | 11 May 2015 | None | |
| WO 2023-184489 A1 | 05 October 2023 | CN 117425976 A | 19 January 2024 |
| | | EP 4386898 A1 | 19 June 2024 |
| | | EP 4386898 A4 | 05 March 2025 |
| | | US 12183917 B2 | 31 December 2024 |
| | | US 2024-0322142 A1 | 26 September 2024 |
| WO 2023-184506 A1 | 05 October 2023 | CN 117441251 A | 23 January 2024 |
| | | EP 4329031 A1 | 28 February 2024 |
| | | EP 4329031 A4 | 05 March 2025 |
| | | US 12199276 B2 | 14 January 2025 |
| | | US 2024-0322141 A1 | 26 September 2024 |
| WO 2014-139328 A1 | 18 September 2014 | AR 101528 A1 | 28 December 2016 |
| | | AU 2014-231567 A1 | 01 October 2015 |
| | | AU 2014-234077 A1 | 01 October 2015 |
| | | BR 112015023187 A2 | 18 July 2017 |
| | | BR 112015023356 A2 | 18 July 2017 |
| | | CA 2905530 A1 | 18 September 2014 |
| | | CA 2905935 A1 | 25 September 2014 |
| | | CN 105246890 A | 13 January 2016 |
| | | CN 105324380 A | 10 February 2016 |
| | | EP 2970264 A1 | 20 January 2016 |
| | | EP 2970278 A1 | 20 January 2016 |
| | | JP 2016-514113 A | 19 May 2016 |
| | | JP 2016-516713 A | 09 June 2016 |
| | | MX 2015012896 A | 02 June 2016 |
| | | MX 2015012899 A | 02 June 2016 |
| | | TW 201444836 A | 01 December 2014 |
| | | TW 201446763 A | 16 December 2014 |
| | | US 2014-0275027 A1 | 18 September 2014 |
| | | US 2016-0060257 A1 | 03 March 2016 |
| | | US 9073922 B2 | 07 July 2015 |
| | | US 9796708 B2 | 24 October 2017 |
| | | UY 35419 A | 31 October 2014 |
| | | WO 2014-151444 A1 | 25 September 2014 |

Form PCT/ISA/210 (patent family annex) (July 2022)